# EUROPÄISCHE PATENTSCHRIFT

(11) **EP 1 152 857 B1**
(45) Veröffentlichungstag und Bekanntmachung des Hinweises auf die Patenterteilung: **18.09.2002**
(21) Anmeldenummer: 99973398.3
(22) Anmeldetag: 25.11.1999
(51) Int. Cl.: B23B 31/18

(54) **GREIFVORRICHTUNG**
GRIPPING DEVICE
DISPOSITIF DE PREHENSION

(30) Priorität: 15.12.1998 DE 19857758
(43) Veröffentlichungstag der Anmeldung: 14.11.2001
(73) Patentinhaber: Schunk GmbH & Co. KG Fabrik für Spann- und Greifwerkzeuge, 74348 Lauffen (DE)
(72) Erfinder: SCHNEIDER, Michael, D-70806 Kornwestheim (DE)
(74) Vertreter: Friz, Oliver
(86) Internationale Anmeldenummer: EP9909141
(87) Internationale Veröffentlichungsnummer: WO00035620

(56) Entgegenhaltungen:
- CH-A- 117 819
- DE-A- 2 826 804

## Beschreibung

Die Erfindung betrifft eine Greifvorrichtung für die Handhabung von Gegenständen mit aufeinander zu- und voneinander wegbewegbaren Greiferfingern, mit einem ersten Gehäuseteil, an welchem ein steuerbares Stellorgan angeordnet ist und einem die Greiferfinger führenden oder lagernden zweiten Gehäuseteil, wobei das Stellorgan direkt oder unter Zwischenordnung eines Druck- oder Zugkörpers auf die Greiferfinger einwirkt.

Die CH-A-177 819 zeigt eine Greifervorrichtung mit den Merkmalen des Oberbegriffs des Anspruchs 1.

Im Hinblick auf eine vielseitige Einsetzbarkeit ein und derselben Greifvorrichtung wäre es wünschenswert, wenn die Stellung der Greiferfinger zueinander im nicht betätigten Ausgangszustand des Stellorgans vorgegeben werden könnten, und zwar auf eine herstellungstechnisch einfache und bedienerfreundliche Weise.

Dies wird mit einer Greifvorrichtung mit den Merkmalen des Anspruchs 1 gelöst.

Es wird also nach der Erfindung durch Verstellen, d.h. Verschieben, Verdrehen oder Verschrauben der beiden Gehäuseteile, welche einerseits das Stellorgan bzw. andererseits die Greiferfinger halten, stützen oder lagern, die Ausgangsstellung der Greiferfinger zueinander eingestellt. Dies eröffnet die Möglichkeit, ein und dieselbe Greifvorrichtung zum Greifen verschieden großer Gegenstände einzusetzen und zwar auch dann, wenn das bei der Greifvorrichtung eingesetzte Stellorgan nur einen verhältnismäßig geringen Stellweg erbringen kann.

Wenn vorstehend von Gehäuseteilen die Rede ist, so ist hiermit nicht notwendigerweise ein die Vorrichtung umschließendes Teil gemeint, sondern im Prinzip ein jegliches Bauteil der Greifvorrichtung, gegenüber dem das Stellorgan einerseits bzw. die Greiferfinger andererseits gehalten, gestützt oder gelagert sind und bei Verstellen der Gehäuseteile gegeneinander mit diesen mitbewegt werden.

Es erweist sich desweiteren als vorteilhaft, wenn zum Fixieren der durch Verstellen der Gehäuseteile zueinander erreichten Voreinstellung neben einer grundsätzlich denkbaren reibschlüssigen Fixierung Rastmittel oder auch Klemmmittel vorgesehen sind.

Der erfindungsgemäße Gedanke der Verstellung der Gehäuseteile zueinander ist im weitesten Sinne auszulegen. Es wäre also bspw. denkbar, dass die Gehäuseteile über eine lineare, insbesondere in Stellrichtung des Stellorgans verlaufende Führung gegeneinander verschieblich sind. Es wäre ebenfalls denkbar und vorteilhaft, wenn die beiden Gehäuseteile über eine Auflaufschräge, also über zueinander keilförmig verlaufende Gleitflächen miteinander verbunden sind. Eine derartige Auflaufschräge könnte sich linear aber auch kreisbogenförmig erstrecken, so dass die beiden Teile gegeneinander verdreht werden, um die Verstellung herbeizuführen. Als ganz besonders vorteilhaft erweist es sich, wenn der erste und der zweite Gehäuseteil über ein Gewinde miteinander verschraubbar sind. Solchenfalls kann durch Verdrehen der beiden Gehäuseteile deren Abstand und damit der Abstand der Greiferfinger von dem Stellorgan verändert werden, was infolge der Kopplung der Greiferfinger und des Stellorgans miteinander zu einer veränderten Ausgangsstellung der Greiferfinger zueinander führt.

Unter Anwendung des erfindungsgemäßen Gedankens können Greifvorrichtungen mit aufeinander zu bzw. voneinander weg verschiebbaren, verdrehbaren oder verschwenkbaren Greiferfingern im Sinne der vorliegenden Erfindung ausgebildet werden. Es könnte sich also um einen Parallelfingergreifer handeln, dessen Finger über ein keilhakenförmiges Zugelement, welches mit einem Stellorgan zusammenwirkt, verstellt werden. Nach einer anderen Ausführungsform könnten die Greiferfinger schwenkbar an dem zweiten Gehäuseteil angelenkt sein, so dass durch die Verstellung des ersten und zweiten Gehäuseteils zueinander ein Greiferfingeröffnungswinkel voreinstellbar ist. Derartiges erweist sich als besonders vorteilhaft, wenn die Greifvorrichtung einen Zentrischgreifer bildet, wenn also die Greiferfinger einen zu ergreifenden Gegenstand entweder von außen im wesentlichen durch eine radiale Stellbewegung der Greiferfinger oder durch Eingriff in eine Öffnung und radiales Auseinandergehen der Greiferfinger zueinander ergreifen. Je nach Größe des zu umgreifenden Gegenstands bzw. der Öffnung, in welche die Greiferfinger zunächst eingreifen, um sich dann zu weiten, kann durch Verstellen der Gehäuseteile zueinander die Greiferfingergrundeinstellung bzw. der Greiferfingeröffnungswinkel voreingestellt werden.

Es erweist sich desweiteren als vorteilhaft, wenn die Schwenkachse der Greiferfinger senkrecht zur Stellrichtung des Stellorgans oder des zwischengeordneten Druck- oder Zugkörpers verläuft.

Die Kopplung der Greiferfinger mit dem Stellorgan kann in an sich beliebiger Weise erfolgen. So ist bspw. denkbar, dass das Stellorgan direkt auf die Greiferfinger einwirkt oder - wie bereits eingangs erwähnt - unter Zwischenordnung eines Druck- oder Zugkörpers, also eines die Stellbewegung des Stellorgans auf die Greiferfinger übertragenden Stellkörpers. Das Stellorgan oder ein solcher Druck- oder Zugkörper könnte in an sich beliebiger Weise, etwa gelenkig mit einem jeweiligen Greiferfinger verbunden sein, wobei dafür Sorge zu tragen ist, dass ein Verstellen der Gehäuseteile gegeneinander möglich ist und nicht durch die Kopplung von Stellorgan und Greiferfinger blockiert ist.

Nach einer bevorzugten Ausführungsform der Erfindung liegt das Stellorgan oder der zwischengeordnete Druck- oder Zugkörper mit einer Wirkfläche gegen eine Gegenwirkfläche der Greiferfinger belastend an und bewegt bei Ansteuerung des Stellorgans die Greiferfinger aufeinander zu oder voneinander weg. Der zwischengeordnete Druck- oder Zugkörper kann in an sich beliebiger Weise ausgebildet sein. Er kann bspw. unlösbar an das Stellorgan angeformt, insbesondere angespritzt oder in beliebiger Weise anmontiert sein. Er kann beliebige Form aufweisen, obwohl es sich als zweckmäßig erwiesen hat, wenn der Körper stiftförmig ist und sich bspw. in Stellrichtung erstreckt, um die Stellbewegung des Stellorgans auf die Greiferfinger zu übertragen.

Als ganz besonders vorteilhaft hat es sich erwiesen, wenn das Stellorgan oder der Druck- oder Zugkörper eine rotationssymmetrische, insbesondere kegelmantelförmige Wirkfläche aufweist. Dies eröffnet die Möglichkeit, dass durch ein und denselben Körper, bei zentrischer Anordnung der Greiferfinger zueinander, die Gegenwirkflachen aller Greiferfinger beaufschlagt bzw. betätigt werden können. Es kann dann durch Verdrehen der Gehäuseteile gegeneinander eine Greiferfingervoreinstellung erreicht werden.

Obschon für die Verwirklichung des erfindungsgemäßen Gedankens ein an sich beliebiges und übliches Stellorgan, also ein hydraulisches, pneumatisches oder über ein mechanisches Getriebemittel arbeitendes Stellorgan verwendet werden kann, erweist es sich als besonders vorteilhaft, wenn das Stellorgan von einem piezoelektrischen Aktor gebildet ist. Piezoelektrische Aktoren sind besonders einfach durch Anlegen einer Steuerspannung zu steuern. Sie haben jedoch nur einen verhältnismäßig geringen Stellweg.

Ein weiteres Charakteristikum von Piezoaktoren oder allgemein von piezoelektrischen Stellelementen besteht darin, dass sie eine linear fallende und gegen Null gehende Kraft/Weg-Charakteristik aufweisen. Dies bedeutet, dass die Stellkraft bei Anlegen einer Steuerspannung im ersten Moment, also bei geringster Auslenkung am größten ist und mit zunehmender Auslenkung linear gegen Null geht. Man ist bei der Verwendung von piezoelektrischen Aktoren bestrebt, einen Arbeitsbereich mit hinreichender Greifkraft der Greiferfinger zu erreichen. Insofern erweist sich die Erfindung beim Einsatz von piezoelektrischen Aktoren als Stellorgan als besonders vorteilhaft, da durch die Voreinstellung der Greiferfinger zueinander unabhängig von der Größe des zu greifenden Gegenstands stets derselbe vorteilhafte Arbeitsbereich in der Kraft/Weg-Charakteristik des Piezoaktors vorgegeben werden kann. Mit anderen Worten kann eine Öffnung mit Innendurchmesser 30 mm mit derselben Greifkraft ergriffen werden wie eine solche mit Innendurchmesser 50 mm.

Bei der vorteilhaften Verwendung von Biegeaktoren, deren freie Enden an dem ersten Gehäuseteil angeordnet sind, so dass der Biegeaktor bei Ansteuerung eine bogenförmige Krümmung erfährt, durch die er auf die Greiferfinger einwirkt, kann eine Stellwegvergrößerung aber auch eine Kraftverstärkung erreicht werden, wenn mehrere Biegeaktoren in entsprechender Weise übereinander angeordnet werden.

Im übrigen erweisen sich piezoelektrische Stellelemente angesichts ihres zu vernachlässigenden Gewichtes-verglichen etwa zu elektromagnetischen Stellorganen - als besonders vorteilhaft.

Nach einem weiteren Erfindungsgedanken wird die Verwendung einer Greifvorrichtung, wie sie vorausgehend beschrieben wurde, zum Ergreifen von CD-Discs in deren zentralen Öffnung als besonders vorteilhaft angesehen.

Weitere Merkmale, Einzelheiten und Vorteile der Erfindung ergeben sich aus der zeichnerischen Darstellungen und nachfolgenden Beschreibung einer bevorzugten Ausführungsform der erfindungsgemäßen Greifvorrichtung. In der Zeichnung zeigt:
- Figur 1: eine perspektivische Darstellung einer erfindungsgemäßen Greifvorrichtung;
- Figur 2: eine Draufsicht auf die Greifvorrichtung nach Figur 1;
- Figuren 3 und 4: zwei Schnittansichten der Greifvorrichtung nach Figur 1;
- Figur 5: verschiedene Anordnungen von piezoelektrischen Biegeaktoren und
- Figur 6: eine Darstellung der Kraft/Weg-Charakteristik eines piezoelektrischen Stellmittels.

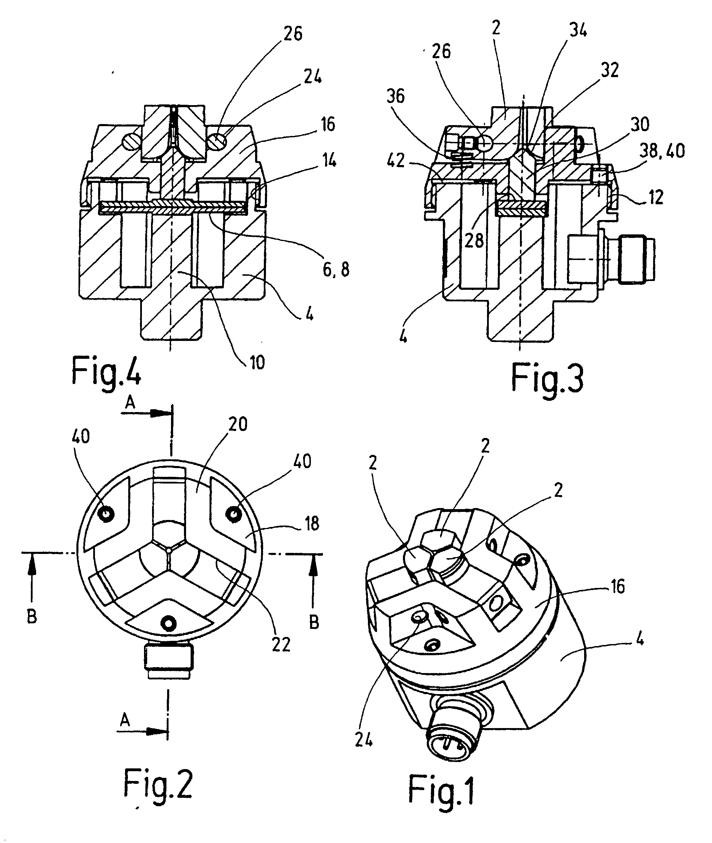

Die Figuren 1 bis 4 zeigen verschiedene Ansichten einer bevorzugten Ausführungsform einer Greifvorrichtung, die als Zentrischgreifvorrichtung ausgebildet ist und drei schwenkbare in einem Winkel von jeweils 120° zueinander angeordnete Greiferfinger 2 aufweist. Die Greifvorrichtung umfasst ein erstes flanschförmiges Gehäuseteil 4, an dem ein Stellorgan 6 in Form zweier piezoelektrischer Biegeaktoren 8 gehalten sind. Das erste Gehäuseteil 4 ist im wesentlichen topfförmig ausgebildet, es weist jedoch einen zentralen Stützvorsprung 10 auf, gegen den sich die Biegeaktoren abstützen. Hierdurch wird verhindert, dass die Biegeaktoren in einer der bestimmungsgemäßen Stellrichtung entgegengesetzten Richtung verbogen und dadurch zerstört werden.

An einem äußeren Umfangsabschnitt ist das erste Gehäuseteil 4 mit einem Außengewindeabschnitt 12 versehen, welches mit einem Innengewindeabschnitt 14 eines zweiten Gehäuseteils 16 verschraubt ist. Das zweite Gehäuseteil 16 lagert die drei Greiferfinger 2 schwenkbar. Hierzu sind an einer Stirnseite 18 des zweiten Gehäuseteils 16 Wandvorsprünge 20 vorgesehen, welche einen sternförmigen Aufnahmeraum 22 für die Greiferfinger 2 bilden.

Gegen eine von dem Stützvorsprung 10 abgewandte Oberseite 28 der Biegeaktoren 8 stützt sich ein stiftförmiger Druckkörper 30 ab, der an seinem freien Ende eine kegelmantelförmige Wirkfläche 32 aufweist, über die er sich gegen eine jeweilige Wirkfläche 34 der Greiferfinger 2 abstützt. Die jeweiligen Flächen 32 und 34 sind verrundet ausgebildet. Wenn der Druckkörper 30 in den Figuren 3 und 4 unter der Wirkung der Biegeaktoren 8 geringfügig nach oben bewegt wird, so verschwenkt er die Greiferfinger 2 um deren jeweiligen Schwenkstift 26, entgegen der Kraft einer jeweiligen Feder 36, welche versucht, die jeweiligen Greiferfinger 2 aufeinander zu zu verschwenken.

Im nicht angesteuerten Zustand der Biegeaktoren haben diese die in Figur 4 dargestellte Gestalt. Der Druckkörper 30 ist also in Figur 4 in seiner untersten Stellung. Wird nun der zweite Gehäusekörper 16 weiter auf den Außengewindeabschnitt 12 des ersten Gehäuseteils 4 aufgeschraubt, so gleiten die Wirkfläche 32 des Druckkörpers 30 und die jeweiligen Wirkflächen 34 der Greiferfinger 2 derart gegeneinander, dass die Greiferfinger 2 voneinander weggeschwenkt werden, das bedeutet, dass der Öffnungswinkel der Greiferfinger 2 zueinander zunimmt. Durch mehr oder weniger weitgehendes Aufschrauben des zweiten Gehäuseteils 16 auf den ersten Gehäuseteil 4 kann also eine Voreinstellung des Greiferfingeröffnungswinkels der Greiferfinger 2 erreicht werden. Um eine gewünschte Voreinstellung des Greiferfingeröffnungswinkels zumindest zeitweise, also zur Durchführung einer Anzahl von Greifvorgängen, unverstellbar zu stellen, ist hierfür eine Anzahl von drei Klemmmitteln 38 in Form von in die Stirnseite 18 des zweiten Gehäuseteils 16 eingeschraubten Gewindestiften 40 vorgesehen, die sich gegen die Stirnseite 42 einer in Umfangsrichtung verlaufenden Flanschwand des ersten Gehäuseteils 4 abstützen. Durch Anziehen der Gewindestifte 14 kann eine Klemmung und damit eine Fixierung der momentanen Drehstellung des zweiten Gehäuseteils 16 gegenüber dem ersten Gehäuseteil 4 erreicht werden.

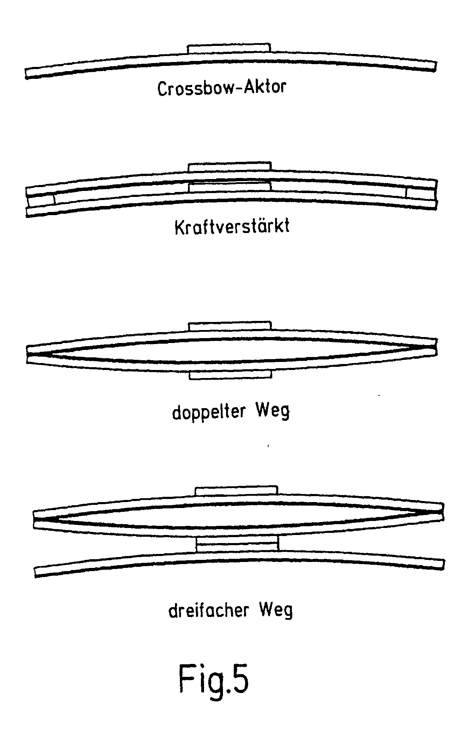

Bei Ansteuerung der piezoelektrischen Biegeaktoren 8 kommt es zu einer in der Figur 5 für verschiedene Anordnungen von Aktorpaketen dargestellten Stellbewegung. Beispielsweise läßt sich der Stellweg eines einzigen in Figur 5 oben dargestellten Crossbow-Aktors verdoppeln bzw. verdreifachen, wenn die beiden in Figur 5 unteren Anordnungen gewählt werden. Werden zwei Aktoren so angeordnet, dass sie eine gleich gerichtete Stellbewegung durchführen, so läßt sich hierdurch eine Kraftverstärkung erreichen.

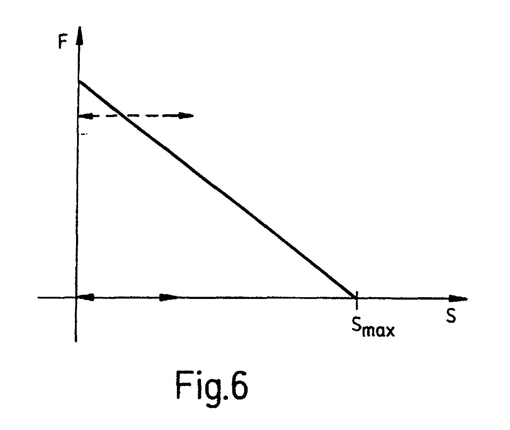

Figur 6 veranschaulicht die Kraft/Weg-Charakteristik eines piezoelektrischen Stellelements. Bei Ansteuerung des piezoelektrischen Stellelements ist die Stellkraft, die sich ausgehend von einer Auslenkung Null ergibt, am größten. Mit zunehmender Auslenkung geht die Kraft bis auf Null bei einer maximalen Auslenkung Sₘₐₓ zurück. Durch die erfindungsgemäße Greiferwinkelvoreinstellung ist es möglich, den Greiferwinkel so einzustellen, dass der Arbeitspunkt der Greifvorrichtung bzw. der piezoelektrischen Stellelemente in den gestrichelt dargestellten Arbeitsbereich geschiftet wird, wo eine maximale Stellkraft zur Verfügung steht.

## Patentansprüche

1. Greifvorrichtung für die Handhabung von Gegenständen mit aufeinander zu- und voneinander wegbewegbaren Greiferfingern (2), mit einem ersten Gehäuseteil (4), an welchem ein steuerbares Stellorgan (6) angeordnet ist, und einem die Greiferfinger (2) führenden oder lagernden zweiten Gehäuseteil (16), wobei das Stellorgan (6) direkt oder unter Zwischenordnung eines Druck- oder Zugkörpers (30) auf die Greiferfinger (2) einwirkt, **dadurch gekennzeichnet, dass** der erste (4) und der zweite (16) Gehäuseteil gegeneinander verstellbar sind und hierdurch eine Voreinstellung der Greiferfinger (2) zueinander erreichbar ist, indem durch die Verstellung des zweiten Gehäuseteils (16) gegen den ersten Gehäuseteil (4) das steuerbare Stellorgan (6) direkt oder unter Zwischenordnung des Druck- oder Zugkörpers (30) auf die Greiferfinger einwirkt, und dass dann durch Ansteuerung desselben Stellorgans (6) unter Beibehaltung der Stellung der beiden Gehäuseteile (4, 16) zueinander die Greiferfinger (2) aufeinander zu oder voneinanderweg bewegbar sind.

2. Greifvorrichtung nach Anspruch 1, **dadurch gekennzeichnet, dass** zum Fixieren der Voreinstellung Rastmittel vorgesehen sind.

3. Greifvorrichtung nach Anspruch 1, **dadurch gekennzeichnet, dass** zum Fixieren der Voreinstellung Klemmmittel (38) vorgesehen sind.

4. Greifvorrichtung nach einem der Ansprüche 1 bis 3, **dadurch gekennzeichnet, dass** der erste (4) und der zweite (16) Gehäuseteil über eine Auflaufschräge miteinander verstellbar zusammenwirken.

5. Greifvorrichtung nach einem der vorstehenden Ansprüche, **dadurch gekennzeichnet, dass** der erste (4) und der zweite (16) Gehäuseteil über ein Gewinde (12, 14) miteinander verschraubt sind.

6. Greifvorrichtung nach einem der vorstehenden Ansprüche, **dadurch gekennzeichnet, dass** die Greiferfinger (2) schwenkbar am zweiten Gehäuseteil (16) angelenkt sind, so dass durch die Verstellung des ersten (4) und zweiten (16) Gehäuseteils zueinander ein Greiferfingeröffnungswinkel voreinstellbar ist.

7. Greifvorrichtung nach Anspruch 6, **dadurch gekennzeichnet, dass** die Schwenkachse (24) der Greiferfinger (2) senkrecht zur Stellrichtung des Stellorgans (6) oder des zwischengeordneten Druckoder Zugkörpers (30) verläuft.

8. Greifvorrichtung nach einem der vorstehenden Ansprüche, **dadurch gekennzeichnet, dass** das Stellorgan (6) oder der zwischengeordnete Druckoder Zugkörper (30) mit einer Wirkfläche (32) gegen eine Gegenwirkfläche (34) der Greiferfinger (2) belastend anliegt und bei Ansteuerung des Stellorgans (6) die Greiferfinger (2) aufeinander zu oder voneinander wegbewegt.

9. Greifvorrichtung nach einem der vorstehenden Ansprüche, **dadurch gekennzeichnet, dass** das Stellorgan (6) oder der Druck- oder Zugkörper (30) eine rotationssymmetrische, insbesondere kegelmantelförmige Wirkfläche (32) aufweist.

10. Greifvorrichtung nach einem der vorstehenden Ansprüche, **gekennzeichnet durch** zueinander zentrisch angeordnete Greiferfinger (2).

11. Greifvorrichtung nach einem der vorstehenden Ansprüche, **dadurch gekennzeichnet, dass** das Stellorgan (6) von einem piezoelektrischen Aktor (8) gebildet ist.

12. Greifvorrichtung nach Anspruch 11, **dadurch gekennzeichnet, dass** der piezoelektrische Aktor (8) ein Biegeaktor ist.

13. Greifvorrichtung nach Anspruch 12, **dadurch gekennzeichnet, dass** der Biegeaktor (8) mit seinen freien Enden an dem ersten Gehäuseteil (4) angeordnet ist, so dass er bei Ansteuerung eine bogenförmige Krümmung erfährt, durch die er auf die Greiferfinger (2) einwirkt.

14. Greifvorrichtung nach Anspruch 13, **dadurch gekennzeichnet, dass** das Stellorgan (6) von einem Paket von mehreren Biegeaktoren gebildet ist, die kraftverstärkend und/oder stellwegvergrößernd zueinander angeordnet sind.

## Claims

1. Gripping device for handling objects with gripper tools (2) that move towards and away from each other with a first housing section (4) on which a controllable regulating unit (6) is placed and a second housing section (16) that guides or bears the gripping tools (2), whereby the regulating unit (6) directly affects the gripping tools (2) or via an interposed pressure or draft unit (30), distinguished by the fact that the first (4) and the second (16) housing section can be offset against each other, which results in a pre-adjustment of the gripper tools (2) towards each other through the direct influence of the controllable regulating unit (6) on the gripper tools (2) directly or via the interposed pressure or draft unit (30) by moving the second housing section (16) against the first housing section (4) and whereby by accessing this very regulating unit (6) while maintaining the position of the two housing sections (4, 16) towards one another, the gripper tools (2) can be moved towards or away from each other.

2. Gripping device according to claim no. 1, distinguished by the fact that stops are provided for arresting the preset position.

3. Gripping device according to claim no. 1, distinguished by the fact that clamps are provided for arresting the preset position.

4. Gripping device according to one of the claims from 1 to 3 distinguished by the fact that that the first (4) and the second (16) housing section interact with each other adjustably via a support bevel.

5. Gripping device according to one of the above claims distinguished by the fact that the first (4) and the second (16) housing section are screwed to each other via a thread (12, 14).

6. Gripping device according to one of the above claims distinguished by the fact that the gripper tools (2) are pivoted on the second housing section (16) and can be swivelled so that it is possible to preset a gripping tool opening angle by adjusting the first (4) and the second (16) housing section towards each other.

7. Gripping device according to claim no. 6 distinguished by the fact that the swivel axis (24) of the gripper tools (2) runs diagonally to the regulating direction of the regulating unit (6) or the interposed pressure or draft unit (30).

8. Gripping device according to one of the above claims distinguished by the fact that the regulating unit (6) or the interposed pressure or draft unit (30) strains with an active area (32) against a counter-active area (34) of the gripper tools (2) and moves the gripper tools (2) towards or away from each other when accessing the regulating unit (6).

9. Gripping device according to one of the above claims distinguished by the fact that the regulating unit (6) or the pressure or draft unit (30) feature a rotation-symmetric, cone surface shaped active area (32).

10. Gripping device according to one of the above claims distinguished by gripper tools (2) aligned centrically towards each other.

11. Gripping device according to one of the above claims distinguished by the fact that the regulating unit (6) consists of a piezoelectric actuator (8).

12. Gripping device according to claim 11 distinguished by the fact that the piezoelectric actuator (8) is a flexion actuator.

13. Gripping device according to claim 12 distinguished by the fact that the piezoelectric actuator (8) is aligned on the first housing section (4) with its free ends so that it experiences an arched bend with which it acts upon the gripper tools (2).

14. Gripping device according to claim 13 distinguished by the fact that the regulating unit (6) consists of a package with several flexion actuators that are aligned in a power-amplifying and/or adjustment path enlarging way towards each other.

## Revendications

1. Dispositif de préhension pour la manipulation d'objets, comportant des doigts de préhension (2) pouvant être rapprochés les uns vers les autres et éloignés les uns des autres, une première partie d'enveloppe (4) sur laquelle est agencé un organe de réglage (6) pouvant être commandé, et une seconde partie d'enveloppe (16) logeant ou guidant les doigts de préhension (2), l'organe de réglage (6) agissant directement ou par l'entremise d'un corps de pression ou de traction (30) sur les doigts de préhension (2), **caractérisé en ce que** la première (4) et la seconde (16) parties d'enveloppe peuvent être déplacées l'une contre l'autre et qu'il est possible d'obtenir de cette façon un préréglage des doigts de préhension (2) les uns par rapport aux autres, par le fait que, par le déplacement de la seconde partie d'enveloppe (16) contre la première partie d'enveloppe (4), l'organe de réglage (6) pouvant être commandé agit, directement ou par l'entremise du corps de pression ou de traction (30), sur les doigts de préhension, et **en ce que**, par la commande de ce même organe de réglage (6), tout en conservant la position des deux parties d'enveloppe (4, 16) l'une par rapport à l'autre, les doigts de préhension (2) peuvent être rapprochés les uns vers les autres ou éloignés les uns des autres.

2. Dispositif de préhension selon la revendication 1, **caractérisé en ce que** des moyens d'arrêt sont prévus pour fixer le préréglage.

3. Dispositif de préhension selon la revendication 1, **caractérisé en ce que** des moyens de serrage (38) sont prévus pour fixer le préréglage.

4. Dispositif de préhension selon l'une des revendications 1 à 3, **caractérisé en ce que** la première (4) et la seconde (16) parties d'enveloppe co-agissent entre elles de manière mobile, par l'intermédiaire d'un plan incliné.

5. Dispositif de préhension selon l'une des revendications précédentes, **caractérisé en ce que** la première (4) et la seconde (16) parties d'enveloppe sont vissées entre elles par l'intermédiaire d'un filetage (12, 14).

6. Dispositif de préhension selon l'une des revendications précédentes, **caractérisé en ce que** les doigts de préhension (2) sont articulés de façon pivotante sur la seconde partie d'enveloppe (16), de telle manière que, par le déplacement de la première (4) et de la seconde (16) parties d'enveloppe l'une par rapport à l'autre, un angle d'ouverture de doigts de préhension puisse être préréglé.

7. Dispositif de préhension selon la revendication 6, **caractérisé en ce que** l'axe de pivotement (24) des doigts de préhension (2) est perpendiculaire au sens de réglage de l'organe de réglage (6) ou du corps de pression ou de traction (30) intercalé.

8. Dispositif de préhension selon l'une des revendications précédentes, **caractérisé en ce que** l'organe de réglage (6) ou le corps de pression ou de traction (30) intercalé repose en exerçant une pression avec une surface active (32) contre une surface antagoniste (34) des doigts de préhension (2) et, lors de la commande de l'organe de réglage (6), rapproche les doigts de préhension (2) les uns vers les autres ou les éloigne les uns des autres.

9. Dispositif de préhension selon l'une des revendications précédentes, **caractérisé en ce que** l'organe de réglage (6) ou le corps de pression ou de traction (30) présente une surface active (32) à symétrie de révolution, en particulier en forme d'aire latérale de cône.

10. Dispositif de préhension selon l'une des revendications précédentes, **caractérisé par** des doigts de préhension (2) agencés de manière centrée les uns par rapport aux autres.

11. Dispositif de préhension selon l'une des revendications précédentes, **caractérisé en ce que** l'organe de réglage (6) est formé par un élément piézoélectrique (8).

12. Dispositif de préhension selon la revendication 11, **caractérisé en ce que** l'élément piézoélectrique (8) est un élément à flexion.

13. Dispositif de préhension selon la revendication 12, **caractérisé en ce que** l'élément à flexion (8) est agencé avec ses extrémités libres sur la première partie d'enveloppe (4), de manière à subir, lors de la commande, une courbure en forme d'arc par laquelle il agit sur les doigts de préhension (2).

14. Dispositif de préhension selon la revendication 13, **caractérisé en ce que** l'organe de réglage (6) est formé par un ensemble de plusieurs éléments à flexion qui sont agencés entre eux de manière à amplifier la force et/ou à augmenter la course de réglage.
